# FASCICULE DE BREVET EUROPEEN

(11) **EP 1 909 080 B1**
(45) Date de publication et mention de la délivrance du brevet: **06.05.2009**
(21) Numéro de dépôt: 07117593.9
(22) Date de dépôt: 01.10.2007
(51) Int. Cl.: G01J 1/42, G01J 5/20

(54) **Détecteur optique ultrasensible à grande résolution temporelle, utilisant un couplage à réseau**
Ultrasensibler optischer Detektor mit hoher zeitlicher Auflösung basierend auf einem Gitter.
Ultrasensitive optical detector having a high temporal resolution and using a grating.

(30) Priorité: 05.10.2006 FR 0654109
(43) Date de publication de la demande: 09.04.2008
(73) Titulaire: COMMISSARIAT A L'ENERGIE ATOMIQUE, 75015 Paris (FR)
(72) Inventeur: Frey, Laurent, 38600, FONTAINE (FR)
(74) Mandataire: Poulin, Gérard

(56) Documents cités:
- I.MILOSTNAYA ET AL: "Superconducting single-photon detectors designed for operation at 1.55- m telecommunication wavelength" JOURNAL OF PHYSICS: CONFERENCE SERIES, vol. 43, 1 juin 2006 (2006-06-01), pages 1334-1337, XP002432438
- J-C VILLÉGIER, B. DELAET, P.FEAUTRIER, L.FREY, C.DELACOUR, V.BOUCHIAT: "Fabrication of High-Speed Single Photon Detectors in NbN for Quantum Information Processing" JOURNAL OF PHYSICS: CONFERENCE SERIES, vol. 43, 1 juin 2006 (2006-06-01), pages 1373-1376, XP002432437

## Description

### DOMAINE TECHNIQUE

La présente invention concerne un détecteur optique ultrasensible, à grande résolution temporelle, et en particulier un détecteur supraconducteur de photon unique (en anglais, *superconducting single photon detector*), plus simplement appelé SSPD.

Le détecteur objet de l'invention utilise un couplage à réseau (en anglais, grating) et il est apte à fonctionner sous incidence normale.

L'invention s'applique notamment à la détection et à la localisation des défauts de fonctionnement d'un circuit intégré semi-conducteur, par détection de l'émission de photons spécifiques par des transistors défaillants.

Elle s'applique aussi aux circuits de réception et de routage pour les télécommunications à très haut débit, en particulier à ceux qui sont destinés aux satellites de télécommunication, à cause de la très faible dissipation thermique du détecteur objet de l'invention.

L'invention s'applique en outre au codage et à la détection de la clé du code quantique dans un système de cryptographie.

Elle s'applique également à la fabrication de matrices de détecteurs pour l'imagerie de très haute sensibilité, ainsi qu'à la tomographie à un photon ou à photons corrélés.

### ÉTAT DE LA TECHNIQUE ANTÉRIEURE

Des techniques émergentes, telles que le calcul et la cryptographie quantique, le test de défaillance de circuits intégrés en micro-électronique, l'imagerie médicale à détection photonique, la détection d'objets biologiques ou la détection de très faibles signaux pour les télécommunications ou l'astronomie, nécessitent des détecteurs de rayonnements, en particulier dans le domaine visible ou le domaine proche infra-rouge, qui soient très rapides, aient une gigue (en anglais, jitter) très faible, fassent très peu de bruit et soient extrêmement sensibles : ils doivent être capables de détecter de très faibles flux, voire un photon unique.

A ce sujet, on se reportera au document [Romestain 04] qui, comme les autres documents cités par la suite, est mentionné à la fin de la présente description.

Les SSPD ont potentiellement toutes les qualités mentionnées ci-dessus et sont de bons candidats pour remplacer les photodiodes à avalanche et les tubes photomultiplicateurs actuels, dont les performances sont limitées, particulièrement dans le domaine infrarouge.

Les SSPD existent sous forme de STJ, c'est-à-dire de jonctions tunnel supraconductrices (en anglais, *superconducting tunnel junctions),* et sous forme de bolomètres, parmi lesquels on trouve les bolomètres appelés HEB, à savoir les bolomètres à électrons chauds (en anglais, *hot electron bolometers),* qui sont les plus rapides.

Les HEB utilisent des films supraconducteurs ultra-minces, dont l'épaisseur vaut moins de 10 nm, pour obtenir des temps caractéristiques très courts, de l'ordre de 10 ps (voir [FR 2 812 455]). Pour ces films, le matériau de prédilection est le nitrure de niobium (NbN) en phase cubique B1.

Dans ces HEB, le film de NbN est épitaxié sur un substrat qui est typiquement en saphir et dont l'orientation est 11̅02 (plan R); et après structuration, ce film forme des méandres dont la largeur est de l'ordre de 100 nm, le film ayant ainsi la forme d'un serpentin dans la partie active du détecteur (voir [Villégier 04]).

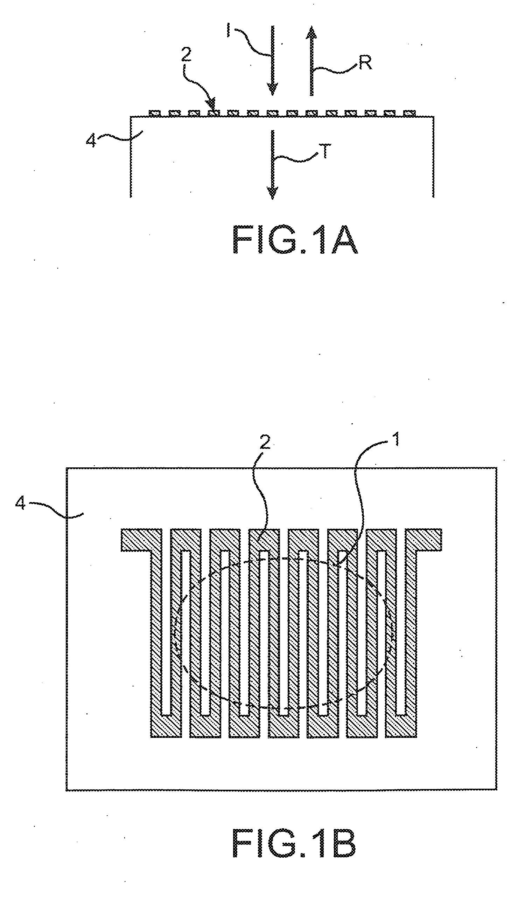

La figure 1A est une vue en coupe schématique d'un tel détecteur. Sur cette figure, le film de NbN et le substrat ont respectivement les références 2 et 4. La figure 1B est une vue de dessus schématique du détecteur.

Un faisceau lumineux I arrive sur ce dernier, sous une incidence normale, et lui est couplé par l'intermédiaire d'une fibre optique (non représentée). Les références R et T correspondent respectivement aux faisceaux lumineux réfléchi et transmis. La projection du faisceau incident I sur le détecteur est représentée en pointillés sur la figure 1B où elle a la référence 1.

La fabrication, le fonctionnement et la caractérisation de ces détecteurs SSPD sont décrits par exemple dans [Goltsman 03]. L'efficacité de détection, ou efficacité de conversion du photon en un signal électrique, est un paramètre-clé qu'il faut optimiser et qui vaudrait 100% pour un détecteur idéal.

Il dépend du taux de remplissage (taux de recouvrement du faisceau incident et de la zone active du détecteur), de l'absorption optique dans la couche de NbN et de la capacité du point chaud (en anglais, *hot spot),* qui est formé par suite de l'absorption du photon, à créer une barrière résistive transitoire sur toute la largeur de la piste supraconductrice. On distingue l'efficacité de détection de l'efficacité quantique qui est définie pour un taux de recouvrement de 100%.

La structure en serpentin a été imaginée pour augmenter le taux de remplissage par rapport à une simple piste droite de NbN, déposée sur un substrat de saphir et éclairée sous une incidence normale. Dans les dernières réalisations (voir [Yang 05]), le taux de remplissage atteint 75%.

L'absorption optique par le NbN est de l'ordre de 30% pour une épaisseur de 4 nm, à la longueur d'onde de 1,55µm. La seule façon de l'augmenter serait d'augmenter l'épaisseur de la couche de NbN, mais le rapport entre la section du point chaud et la section de la bande supraconductrice diminuerait, puisque la largeur de cette bande est limitée à environ 50 nm, et cela provoquerait une chute de l'efficacité globale.

L'efficacité de détection ne peut donc excéder, en théorie, 20 à 25% à 1,55µm (pour un facteur de remplissage de 75%) avec cette architecture qui est principalement limitée par la très faible épaisseur de la couche de NbN éclairée sous incidence normale.

Il serait probablement difficile d'augmenter l'efficacité de détection de façon substantielle sans changer la conception du couplage optique. Les détecteurs réalisés avec un facteur de remplissage de 50% présentent d'ailleurs des efficacités de 5 à 10% à 1,55µm (voir [Korneev 05]).

Plusieurs solutions ont été proposées pour augmenter le couplage de la lumière dans la région absorbante du détecteur.

On a par exemple proposé d'utiliser un miroir et une couche anti-reflet. La lumière qui a traversé le NbN sans avoir été absorbée est alors renvoyée sur le NbN par un miroir concave (voir [FR 2 812 455]) ou par un miroir plan (voir [Le Coupanec 03] et [Rosfjord 06]). Une couche anti-reflet, qui est déposée sur la face arrière du substrat si l'incidence se fait par l'arrière, permet en outre de réduire les pertes par réflexion de l'onde incidente. L'efficacité de détection atteint des valeurs de l'ordre de 50%.

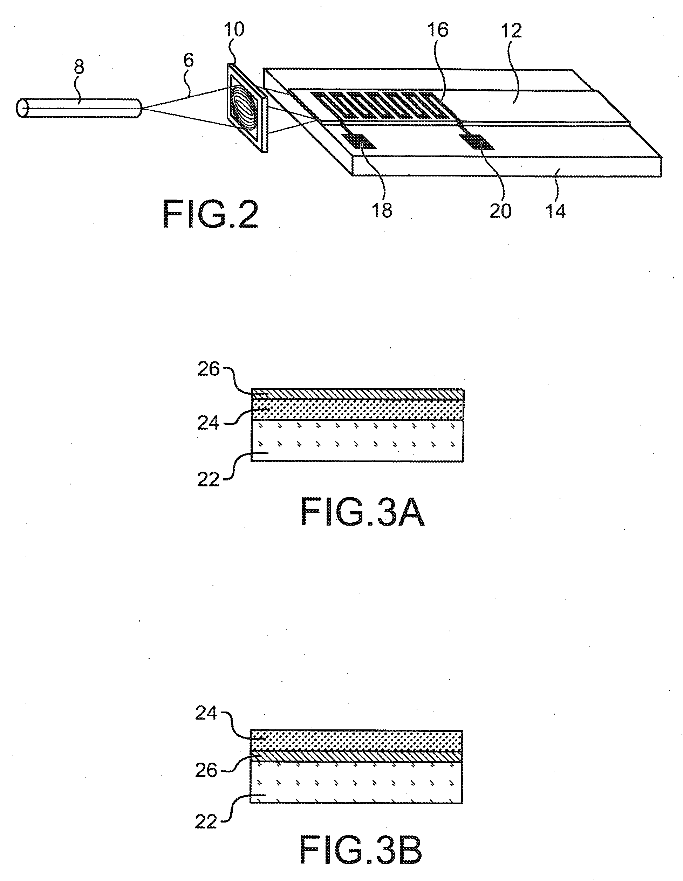

On a également proposé d'utiliser un couplage par guide d'onde (voir [Jackson 03]). Selon cette approche, qui est schématiquement illustrée par la figure 2, la lumière 6 issue d'une fibre optique monomode 8 est focalisée suivant une ligne par un élément d'optique diffractive 10 et injectée par ce dernier dans un guide d'onde plan multimode en silicium 12 qui est formé sur un substrat en silice 14. On précise que ce guide d'onde est monomode verticalement mais multimode latéralement.

Un serpentin de NbN 16 est déposé par-dessus ce guide de silicium. Les extrémités de ce serpentin sont respectivement pourvues de plots de contact 18 et 20. Le serpentin 16 absorbe l'onde évanescente qui est associée au mode guidé.

Un photon, que l'on veut détecter, est susceptible d'être absorbé par une branche des méandres formés par le serpentin, à chaque passage de l'onde évanescente. L'absorption de l'énergie lumineuse par le NbN peut, en principe, approcher 100% si les méandres sont suffisamment nombreux. Mais, de ce fait, l'efficacité de détection est limitée par la grande longueur de NbN.

De plus, la faisabilité de la croissance du NbN monocristallin sur le silicium n'a pas encore été clairement démontrée : la croissance épitaxiale de NbN sur Si nécessite des traitements de surface délicats du silicium ainsi que l'étude du dépôt de couches d'interface par épitaxie.

On pourra également se reporter au document [Wang 04]. Dans ce dernier, on étudie l'absorption d'une couche de NbN, placée dans un empilement de couches planes, dans lequel se propage une onde guidée.

Un exemple d'une telle structure est schématiquement représenté sur la figure 3A où l'on voit un substrat 22 recouvert d'une couche de saphir 24, servant de guide d'onde, et une couche de NbN 26 qui recouvre cette couche 24. Dans une variante, qui est schématiquement représentée sur la figure 3B, la couche de NbN est comprise entre le substrat et la couche de saphir.

Si le guide d'onde est une telle couche de saphir d'épaisseur appropriée, la longueur de NbN nécessaire pour absorber la lumière est typiquement de quelques dizaines de micromètres (les calculs étant faits en une dimension, pour des guides plans).

Cependant, ni la structuration du guide d'onde et du NbN dans le plan des couches, ni la réalisation pratique du détecteur ne sont envisagées dans ce document [Wang 04] : on n'y donne aucune solution technologique incluant le choix des matériaux, un procédé de fabrication et les modalités d'injection de la lumière dans la structure considérée.

### EXPOSÉ DE L'INVENTION

La présente invention vise à résoudre le problème de la conception d'un détecteur optique ultrasensible, à grande résolution temporelle, en particulier d'un détecteur de type SSPD, ce détecteur présentant une efficacité de détection nettement supérieure à celles qui sont obtenues dans l'art antérieur, ce détecteur étant apte à fonctionner sous incidence normale et étant en outre réalisable par des moyens technologiques existants.

Le fonctionnement sous incidence normale permet d'envisager un système de positionnement simple et d'encombrement réduit dans un cryostat, et la possibilité d'extension du principe du couplage à une matrice de détecteurs utilisée par exemple en imagerie.

De façon précise, la présente invention a pour objet un détecteur optique, destiné à détecter au moins un photon, ce détecteur comprenant :
- un substrat diélectrique, ayant un indice de réfraction nₒ, et
- un élément de détection formant un serpentin, l'élément de détection étant placé sur le substrat diélectrique et prévu pour engendrer un signal électrique à partir de l'énergie du ou des photons reçus,
ce détecteur optique étant caractérisé en ce qu'il comprend en outre
- un réseau (en anglais, *grating*) diélectrique unidimensionnel, comportant des lignes parallèles, à savoir des premières lignes qui sont faites d'un premier matériau diélectrique ayant un indice de réfraction n_{H}, et des deuxièmes lignes qui alternent avec les premières lignes et qui sont faites d'un milieu diélectrique ayant un indice de réfraction n_{B}, le réseau diélectrique unidimensionnel étant placé au-dessus de l'élément de détection, l'ensemble constitué par le réseau diélectrique unidimensionnel et l'élément de détection présentant une résonance d'absorption du ou des photons, sous une incidence donnée et pour une polarisation donnée de ce ou ces photons, n_{H} étant supérieur à nₒ et à n_{B}, et
- un superstrat ayant un indice de réfraction ni, ce superstrat étant placé au-dessus du réseau diélectrique unidimensionnel, n_{H} étant en outre supérieur à ni.

La structure du détecteur optique, objet de l'invention, permet d'améliorer considérablement l'efficacité de détection à l'aide du réseau diélectrique unidimensionnel situé au-dessus de l'élément de détection formant un serpentin.

Remarquons que le détecteur, objet de l'invention, doit pouvoir fonctionner avec un très faible flux de photons. La probabilité d'absorption d'un photon est supposée proportionnelle à l'intensité locale du champ que l'on aurait avec un flux de photons important et continu (mêmes cartographies).

De préférence, l'incidence donnée est une incidence normale.

Le superstrat peut être un gaz, par exemple l'air, un liquide, un solide ou même le vide (auquel cas ni vaut 1).

Selon un mode de réalisation préféré de l'invention, le pas (en anglais, pitch) A du réseau diélectrique unidimensionnel est inférieur à λₒ/nₒ, où λₒ représente la longueur d'onde dans le vide du ou des photons, et le couple (wᵣ/Λ, d) est choisi pour conduire à la résonance d'absorption, où wᵣ représente la largeur des premières lignes du réseau diélectrique unidimensionnel et d représente l'épaisseur de ce réseau diélectrique unidimensionnel, et A est en outre inférieur à λₒ/nᵢ.

La différence n_{H}-n_{B} est de préférence supérieure à 1.

Selon un mode de réalisation préféré du détecteur optique objet de l'invention, l'élément de détection est fait d'un matériau supraconducteur.

Ce matériau supraconducteur peut être une phase de nitrure supraconductrice. Cette phase peut être le nitrure de niobium.

Selon un mode de réalisation particulier de l'invention, le serpentin comporte des lignes parallèles, reliées les unes aux autres, et chaque ligne du serpentin est disposée en regard de l'une des lignes du réseau diélectrique unidimensionnel.

Selon un mode de réalisation particulier du détecteur optique objet de l'invention, le serpentin comporte des lignes parallèles, reliées les unes aux autres, et chaque ligne du serpentin est disposée en regard de l'une des premières lignes du réseau diélectrique unidimensionnel.

Selon un premier mode de réalisation particulier de l'invention, Le serpentin comporte des lignes parallèles, reliées les unes aux autres, et les lignes du serpentin et les premières lignes du réseau diélectrique unidimensionnel ont la même largeur et forment des ensembles périodiques ayant la même période.

Selon un deuxième mode de réalisation particulier de l'invention, les premières lignes du réseau diélectrique unidimensionnel ont des largeurs différentes W_{rL} et W_{rS} et les premières lignes dont la largeur vaut w_{rL} alternent avec celles dont la largeur vaut w_{rS}.

Les deuxièmes lignes du réseau diélectrique unidimensionnel peuvent aussi avoir des largeurs différentes.

Selon un mode de réalisation particulier de l'invention, le détecteur optique comprend en outre une couche intermédiaire qui est faite d'un matériau diélectrique ayant un indice de réfraction n supérieur à n_{B} et qui est placée entre l'élément de détection et le réseau diélectrique unidimensionnel.

La présente invention concerne aussi un détecteur optique, destiné à détecter un ou des photons, ce détecteur optique comprenant un séparateur de polarisation (en anglais, *polarisation splitter*) comportant une voie (en anglais, *port*) d'entrée, destinée à recevoir le ou les photons, et deux voies de sortie qui sont respectivement reliées à deux détecteurs optiques conformes à l'invention.

La présente invention concerne en outre une matrice de détecteurs optiques conformes à l'invention.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1A est une vue en coupe schématique d'un détecteur connu, de type SSPD, et a déjà été décrite,
- la figure 1B est une vue de dessus schématique du détecteur de la figure 1A, et a déjà été décrite,
- la figure 2 est une vue en perspective schématique d'un autre détecteur connu, de type SSPD, et a déjà été décrite,
- les figures 3A et 3B sont des vues schématiques de structures multicouches planes connues, à ondes guidées, et ont déjà été décrites,
- la figure 4 est une vue en coupe schématique d'un premier exemple du détecteur objet de l'invention,
- la figure 5 illustre schématiquement les ondes qui sont mises en jeu dans le réseau que comporte le détecteur de la figure 4,
- les figures 6 à 8 sont des vues en coupe schématiques d'autres exemples de détecteurs conformes à l'invention, et
- la figure 9 est une vue schématique d'un détecteur optique comprenant un séparateur de polarisations et deux détecteurs conformes à l'invention.

### EXPOSÉ DÉTAILLÉ DE MODES DE RÉALISATION PARTICULIERS

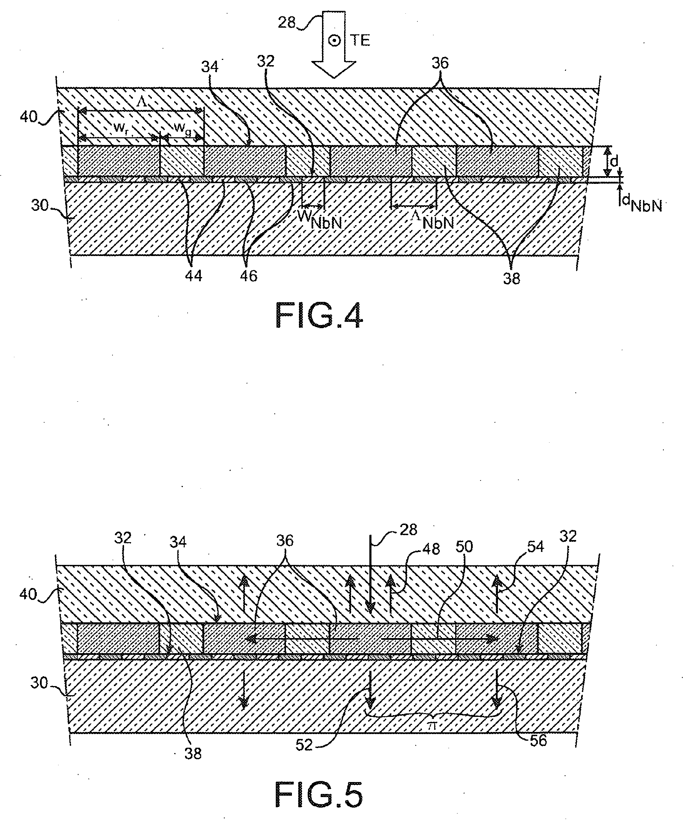

La figure 4 est une vue en coupe schématique d'un exemple du détecteur objet de l'invention. Ce détecteur est destiné à détecter une lumière incidente 28, constitué d'un photon unique ou de plusieurs photons.

La structure considérée sur la figure 4 comprend un substrat diélectrique 30, dont l'indice de réfraction est noté nₒ, et une couche supraconductrice ultra-mince 32, par exemple en NbN, dont l'épaisseur vaut quelques nanomètres, sur le substrat diélectrique 30. Ce dernier est approprié au dépôt de la couche 32.

Cette couche 32 est destinée à engendrer un signal électrique à partir de l'énergie du ou des photons reçus. Elle forme un serpentin et donc des méandres comme dans l'art antérieur.

On se reportera par exemple à la figure 1B des dessins annexés où la couche comporte des lignes parallèles reliées les unes aux autres par des segments qui sont plus courts que ces lignes et sont perpendiculaires à celles-ci.

D'autres configurations sont envisageables pour le serpentin, de préférence des configurations dans lesquelles le serpentin couvre la plus grande surface possible dans la zone éclairée par la lumière incidente, de façon qu'un maximum de photons soit absorbé par le supraconducteur dont est fait le serpentin.

Le détecteur de la figure 4 comprend aussi un réseau (en anglais, *grating*) diélectrique unidimensionnel 34, comprenant des lignes parallèles 36 qui sont formées par-dessus la couche supraconductrice 32, dans un matériau diélectrique de haut indice n_{H}. Ces lignes 36 alternent avec d'autres lignes 38 qui sont faites d'un milieu diélectrique de bas indice n_{B}. Comme on le voit, les lignes 36 et 38 sont parallèles aux lignes de la couche 32.

En outre, le détecteur comprend un superstrat 40 dont l'indice de réfraction est noté ni. Ce superstrat est placé au-dessus du réseau diélectrique 34.

La période, ou pas (en anglais, *pitch*), du réseau 34 est notée A, la largeur des lignes de haut indice Wᵣ et la largeur des lignes de bas indice w_{g}.

Il convient de noter que, dans l'exemple de la figure 4, toutes les lignes 36 du réseau 34 ont la même largeur Wᵣ et l'on dit alors que le réseau est symétrique.

De plus, les lignes supraconductrices 44 de la couche 32 sont séparées par des intervalles 46 qui sont fait d'un matériau diélectrique dont l'indice de réfraction est noté n_{F}.

Le principe de fonctionnement du détecteur de la figure 4 est fondé sur l'excitation d'une résonance d'absorption de la lumière incidente 28 dans le guide segmenté que constitue le réseau 34 (voir plus loin), pour une polarisation et une longueur d'onde données, par exemple une polarisation TE, de la lumière incidente 28 (la direction de polarisation étant alors parallèle aux lignes du réseau 34).

En l'absence de couche supraconductrice 32, la lumière incidente 28 est partiellement réfléchie dans le superstrat 40, partiellement transmise dans le substrat 30, et partiellement diffractée par le guide segmenté que constitue le réseau 34. La lumière guidée est ensuite partiellement re-diffractée dans le superstrat 40 et dans le substrat 30.

La lumière directement transmise dans le substrat et la lumière couplée puis re-diffractée dans ce substrat interfèrent destructivement : leur déphasage (en anglais, *phaseshift*) est égal à π (voir [Rosenblatt 97]).

Pour une certaine longueur d'onde dans le vide (en anglais, *vacuum)* λ₀ de la lumière incidente 28 et une certaine orientation de cette lumière incidente par rapport à la direction des lignes du réseau, les deux ondes ont la même amplitude et les interférences destructives sont complètes. La transmission est nulle et toute la lumière incidente est réfléchie. La structure décrite est alors une structure résonnante en réflexion (voir [Nevière 73]).

La figure 5 illustre schématiquement les ondes qui sont mises en jeu dans un réseau 34 qui présente une résonance en réflexion, comme dans l'exemple qui a été décrit ci-dessus.

Sur la figure 5, on voit encore la lumière incidente 28 (incidence normale dans l'exemple représenté) et les références 48, 50, 52, 54 et 56 représentent respectivement la lumière directement réfléchie, la lumière guidée par le guide segmenté, la lumière directement transmise, la lumière guidée par le guide segmenté puis rayonnée dans le superstrat et la lumière guidée par le guide segmenté puis rayonnée dans le substrat.

La lettre π symbolise le fait que la lumière directement transmise dans le substrat et la lumière couplée puis re-diffractée dans le substrat interfèrent destructivement.

Le principe de fonctionnement que l'on vient de décrire s'applique à une incidence normale de la lumière 28, cette lumière 28 tombant alors perpendiculairement à la surface du superstrat 40.

Cependant, il peut s'appliquer à tout angle d'incidence de cette lumière, allant de 0° à 90°.

En outre, ce principe s'applique au cas de la figure 4 où la couche constituée des lignes 36 et 38 a la double fonction de réseau et de guide. On dit alors que le guide est segmenté. Mais ce principe peut également s'appliquer au cas où ce réseau et le guide constituent deux couches superposées.

Dans la littérature, les guides segmentés ont d'abord été étudiés avec de faibles contrastes d'indice, en tant que filtres spectraux de bande passante très étroite (inférieur à 1 nm).

Il a ensuite été montré (voir [Brundrett 00]) qu'avec un contraste d'indice important, et avec une incidence normale, certaines configurations géométriques de réseaux donnaient accès à des résonances en réflexion bien plus larges du point de vue de la longueur d'onde (100 à 200nm), ce qui est favorable pour des applications de détection comme c'est le cas pour la présente invention.

L'acceptance angulaire du dispositif est également bien plus large et permet de coupler un faisceau focalisé. Enfin, la tolérance sur l'épaisseur du réseau est sensiblement augmentée.

On précise que le superstrat peut être simplement constitué par de l'air (ni étant alors égal à 1).

De même, les lignes 38 du réseau 34 peuvent être de l'air.

Dans la présente invention, on utilise de préférence un fort contraste d'indice, qui est typiquement tel que la différence n_{H}-n_{B} soit supérieure à 1.

La couche supraconductrice structurée et très mince (épaisseur de quelques nanomètres) vient perturber la résonance en absorbant une partie de la lumière. La transmission n'est plus rigoureusement nulle à la résonance mais reste faible, et la réflexion peut diminuer de façon substantielle. Typiquement, 80% de la lumière incidente peuvent être absorbés.

L'absorption peut être optimisée en modifiant légèrement la géométrie du réseau 34, en ce qui concerne son facteur de remplissage et son épaisseur.

Les conditions à remplir pour obtenir une résonance en absorption sont les suivantes :
- condition de guidage : n_{H}>nᵢ, n_{H}>nₒ, n_{H}>n_{B}, de préférence n_{H}-n_{B} > 1,
- pas d'ordre diffracté autre que l'ordre spéculaire : Λ<λ₀/nᵢ et Λ<λ₀/nₒ (le réseau 34 ayant ainsi un pas inférieur à la longueur d'onde dans le vide),
- choix d'un couple (f,d) qui donne une résonance, où f est le facteur de remplissage du réseau, tel que f = wᵣ/Λ, et d est l'épaisseur du réseau 34.

A titre purement indicatif et nullement limitatif, les valeurs suivantes sont utilisables pour l'exemple que l'on vient de décrire en faisant référence à la figure 4 :
λ₀ = 1554nm ;
nᵢ = 1 (milieu constitutif du superstrat : air) ; nₒ = 1,746 (matériau constitutif du substrat : saphir) ; n_{B} = 1 (milieu constitutif des lignes 38 : air) ; n_{H} = 3,48 (matériau constitutif des lignes 36 : silicium) ; A = 800nm ;
Λ_{NbN} = 400nm ; f_{NbN} = 0,5 ; d_{NbN} = 4nm ; n_{F} = 1,45 (A_{NbN} : pas du serpentin, d_{NbN} : épaisseur du serpentin, facteur de remplissage du serpentin : f_{NbN}=W_{NbN}/Λ_{NbN} avec W_{NbN}: largeur des lignes 44 du serpentin).

L'absorption de la structure qui est schématiquement représentée sur la figure 4 a été calculée par RCWA c'est-à-dire par analyse rigoureuse des ondes couplées (en anglais, *rigorous coupled wave analysis)* en fonction des paramètres f et d. Plusieurs résonances apparaissent ; elles sont associées à différents modes du guide segmenté.

Une absorption maximale Aₘₐₓ de 78% est atteinte pour une largeur de ligne wᵣ égale à 660nm, d'où W_{g} = 140nm, et pour une épaisseur d égale à 460nm.

Les tolérances ΔW_{rFWHM} et ΔW_{gFWHM} sur les paramètres Wᵣ et W_{g}, exprimées sous forme de FWHM c'est-à-dire de largeur totale à mi-hauteur (en anglais, *full width at half maximum*)*,* valent 42nm pour Wᵣ et W_{g}, et la tolérance Δd_{FWHM} sur d vaut également 42nm. Ces tolérances ne sont pas très critiques du point de vue de la réalisation technologique de la structure.

La méthode RCWA a également été utilisée pour calculer les spectres de réflexion, de transmission et d'absorption de la structure de la figure 4 en fonction de la longueur d'onde, ainsi que l'évolution de l'absoption de cette structure en fonction de l'angle d'incidence de la lumière.

On trouve que la largeur Δλ_{FWHM} de la résonance en longueur d'onde est égale à 60nm. Elle est relativement large et donc pratique pour l'utilisation.

En outre, on trouve que la largeur angulaire Δθ_{FWHM} de la résonance est égale à 23°. Elle est largement suffisante pour coupler efficacement un faisceau lumineux dont le diamètre vaut 10µm et qui est issu d'une fibre optique.

On précise que l'absorption maximale de 78% est atteinte lorsque les lignes du réseau sont centrées sur des lignes de NbN du serpentin. Dans le cas contraire, l'absorption peut chuter d'environ 20%. Qualitativement, le réseau permet de concentrer la lumière préférentiellement sous les lignes du réseau, et l'absorption est maximale si le NbN est situé sur les lobes du champ électrique optique.

On a obtenu ce résultat en simulant l'intensité du champ électrique optique à la longueur d'onde de résonance dans une période du réseau par la méthode FDTD, c'est-à-dire la méthode des différences finies dans le domaine temporel (en anglais, *finite-difference time-domain method*)*.*

Comme la période des lobes du champ électrique optique est égale à la période du réseau, on peut supprimer les lignes de NbN qui sont situées sous les intervalles de bas indice, où le champ est très faible. Les simulations FDTD donnent alors une absorption de 82% pour une longueur de résonance de 1560nm.

Cette solution a pour mérite de diviser par deux la longueur de NbN nécessaire, et donc de diminuer le bruit causé par les fluctuations quantiques ou classiques, ainsi que les non-uniformités de largeur de la ligne supraconductrice.

La diminution de la longueur totale de la ligne et de l'inductance cinétique associée permet d'avoir un détecteur plus rapide. Cet avantage est mis en exergue dans le document [Kerman 06].

On indique en outre qu'une fine couche uniforme d'un matériau diélectrique, ayant un indice de réfraction égal à n_{F}, peut être ajoutée au-dessus du serpentin de NbN (pour des raisons de réalisation technologique) sans modifier l'absorption.

Dans une variante de la structure qui est représentée sur la figure 4, on utilise la même période et la même largeur de ligne pour le réseau de NbN et le réseau de haut indice. La structure est plus simple à réaliser car elle permet de n'utiliser qu'un seul niveau de photolithographie et de réaliser une gravure simultanée, mais la précision requise sur les dimensions est un peu plus importante.

A titre purement indicatif et nullement limitatif, on utilise les valeurs suivantes dans le cas de cette variante :
λ₀ = 1549nm ;
nᵢ = 1 ; nₒ = 1, 746 ; n_{B} = 1, n_{H} = 3, 48 ; A = 640nm ; wᵣ = 534nm (f = 0,835) d'où w_{g} = 106nm ; d = 240nm ;
Λ_{NbN} = 640nm ; f _{NbN} = 0 , 835 ; d_{NbN} = 4nm ; et n_{F} = 1.

On obtient alors les résultats suivants :
Aₘₐₓ = 77% ; ΔW_{r FMHM} = ΔW_{g FWHM} = 23nm ; Δd _{FWHM} - 37nm ; Δλ_{FWHM} = 50nm ; et Δθ_{FWHM} = 18°.

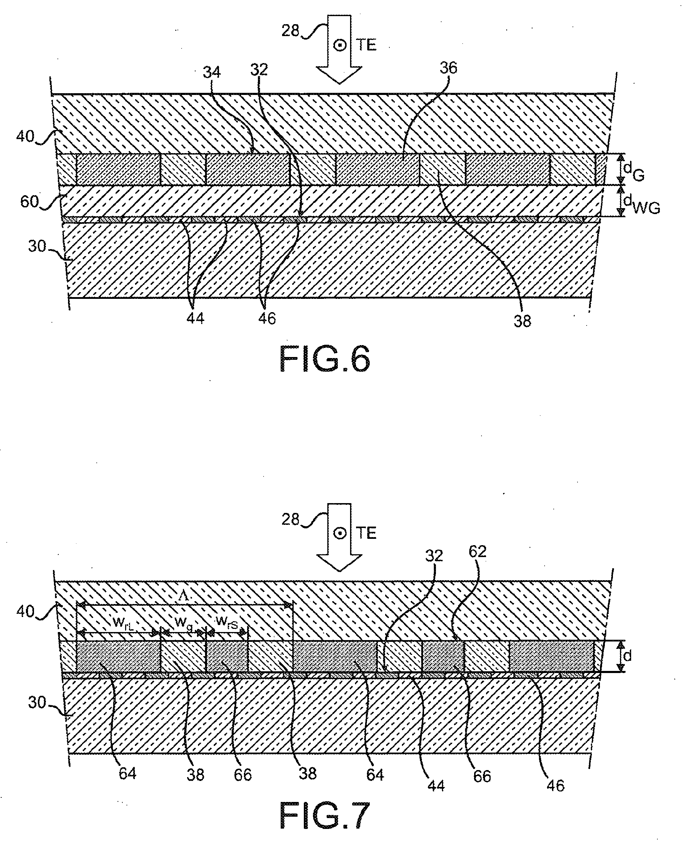

Dans une autre variante, qui est schématiquement représentée sur la figure 6, on ajoute une couche diélectrique uniforme de haut indice 60 entre la couche supraconductrice 44 et le réseau 34. L'épaisseur de la couche 60 est notée d_{WG}; son indice de réfraction n_{I} est supérieur à n_{B}, ni, et nₒ, avec de préférence n_{I}-n_{B}>1 ; n_{I} est par exemple égal à n_{H}.

Dans ce cas, le réseau 34, dont l'épaisseur vaut d_{G}, assure uniquement le couplage de la lumière vers le guide constitué par la couche uniforme 60.

A titre purement indicatif et nullement limitatif, on utilise les valeurs suivantes dans le cas de cette autre variante :
λ₀ = 1549nm ;
ni = 1 ; nₒ = 1, 746 ; n_{B} = 1 ; n_{H} = 3, 48 ; A = 800nm ; Wᵣ = 388nm d'où W_{g} = 412nm ; d_{G} = 235nm ; d_{WG} = 312nm ;
Λ_{NbN} = 400nm ; f_{NbN} = 0,5 ; d_{NbN} = 4nm ; n_{F} = 1,45.

On obtient alors les résultats suivants :
Aₘₐₓ = 78% ; ΔW_{r FWHM} =ΔW_{g FWHM}> 120nm ; Δd_{WG FWHM} = 54nm ; Δλ_{FWHM} = 112nm ; et Δ_{θFWHM} = 29°.

Cette dernière structure présente également l'avantage d'être très peu sensible au facteur de remplissage du réseau 34.

On peut augmenter davantage l'absorption du détecteur optique objet de l'invention en utilisant un réseau « asymétrique » au lieu d'un réseau symétrique.

Un exemple de détecteur comportant un réseau asymétrique est schématiquement représenté sur la figure 7 où le réseau 32 de la figure 6 est remplacé par un réseau asymétrique 62 dans lequel des lignes 64, ayant une largeur w_{rL} alternent avec des lignes 66 ayant une largeur wᵣₛ différente de w_{rL}.

On précise que les lignes 64 et 66 sont encore faites du matériau diélectrique ayant l'indice de réfraction n_{H}.

Pour un réseau symétrique, il existe une règle de sélection qui autorise une seule résonance en l'un des deux bords de la seconde bande interdite (voir [Vincent 79]). L'asymétrie du réseau lève la dégénerescence (voir [Vincent 79]) et une simulation d'une structure à réseau asymétrique par RCWA permet d'observer que les résonances se trouvent dédoublées dans le plan (f, d) pour chaque mode TE du guide. En outre, deux résonances associées à des modes TE différents peuvent se croiser dans ce plan, ce qui peut augmenter l'absorption.

A titre purement indicatif et nullement limitatif, on utilise les valeurs suivantes dans l'exemple de la figure 7 :
λ₀ = 1546nm ;
ni = 1 ; nₒ = 1, 746 ; n_{B} = 1 ; n_{H} = 3, 48 ; A = 1600nm ; W_{rL} = 732nm ; w_{rS} = 549nm ; l'espace W_{g} entre les lignes 64 et 66 est constant : W_{g} = 160nm ; d = 448nm ;
Λ_{NbN} = 400nm ; f_{NbN} = 0,5 ; d_{NbN} = 4nm ; n_{F} = 1,45.

Il convient de noter que la période A du réseau 34 est égale à wᵣ+w_{g} dans l'exemple de la figure 4 et à w_{rL}+wᵣₛ+2w_{g} dans l'exemple de la figure 7.

On obtient alors les résultats suivants :
Aₘₐₓ = 92% ; Δw_{rL FWHM} = Δw_{rS FWHM} = Δw_{g FWHM} = 40nm ; Δd_{FWHM} = 39nm ; Δλ_{FWHM} = 56nm ; et Δθ_{FWHM} = 21°.

En outre, Aₘₐₓ est égal à 88% si l'on supprime les lignes de NbN qui sont situées sous les intervalles entre les lignes de haut indice, pour : W_{rL} = 742nm, wᵣₛ = 556nm et d = 444nm.

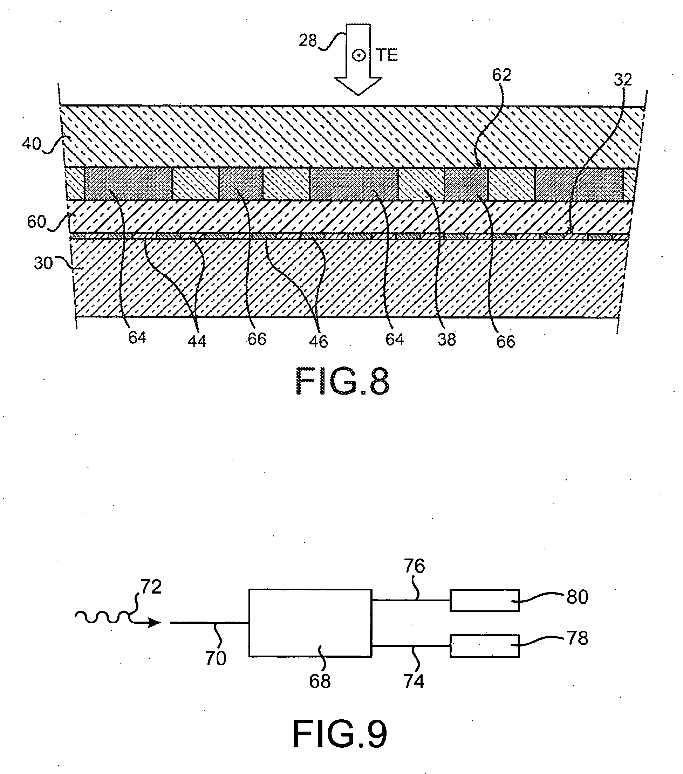

On peut « combiner » les détecteurs des figures 6 et 7. Cette possibilité est illustrée par l'exemple qui est schématiquement représenté sur la figure 8. Dans cet exemple, le détecteur comprend la couche uniforme de haut indice 60 et le réseau 62 à profil asymétrique, qui est alors compris entre la couche 60 et le superstrat 40.

Cela permet de donner davantage de degrés de liberté au détecteur optique et d'obtenir des résonances d'absorption qui sont optimisées avec différentes configurations géométriques.

A titre purement indicatif et nullement limitatif, on utilise les valeurs suivantes dans l'exemple de la figure 8 :
λ₀ = 1550nm ;
ni = 1 ; nₒ = 1,746 ; n_{B} = 1 ; n_{H} = 3,48 ; A = 1600nm ; w_{rL} = 616nm ; wᵣₛ = 431nm ; espace entre lignes 64 et 66 constant : W_{g} = 276nm ; d_{G} = 440nm ; d_{WG} = 598nm ;
Λ_{NbN} = 400nm ; f_{NbN} = 0,5 ; d_{NbN} = 4nm ; n_{F} = 1,45.

On obtient alors les résultats suivants :
Aₘₐₓ = 94% ; ΔW_{rL FWHM} = ΔW_{rS FWHM} = ΔW_{g FWHM} = 116nm ; Δd_{G FWHM} = 43nm ; Δλ_{FWHM} = 43nm ; et Δθ_{FWHM} = 12°.

Dans toutes les structures considérées ci-dessus, la distance de propagation de l'onde guidée est très courte. La lumière reste confinée latéralement dans une zone sensiblement égale à la taille du faisceau que forme la lumière incidente. On a vérifié cela par simulation FDTD pour un faisceau gaussien ayant un diamètre égal à 10µm.

On peut donc utiliser un serpentin de NbN ayant une longueur L comparable à celle qui est utilisée dans l'art antérieur et qui vaut quelques centaines de micromètres, ou une longueur L/2 si l'on supprime les lignes de NbN qui sont situées sous les intervalles entre les lignes de haut indice.

On précise en outre que les largeurs W_{g} des lignes 38 du réseau 34 peuvent aussi être inégales (comme peuvent l'être les largeurs wᵣ des lignes 36). Ceci présente un intérêt : on peut avoir le cas où le réseau est constitué d'un motif répétitif d'alternance de lignes 36 et 38, ce motif comprenant plusieurs lignes séparées inégalement.

Par ailleurs, exepté le matériau du serpentin 32, qui est généralement un matériau supraconducteur, les matériaux utilisés dans l'invention ont de préférence un coefficient d'extinction très faible, inférieur à 5x10⁻⁴, ce qui rend négligeables les pertes par absorption dans ces matériaux.

Il convient en outre de noter que les détecteurs conformes à l'invention, que l'on vient de décrire, sont conçus pour une polarisation donnée (TE ou TM) de la lumière incidente. Dans le cas d'une lumière incidente de polarisation inconnue, on peut utiliser un séparateur de polarisations et un détecteur tel que décrit ci-dessus sur chacune des voies (en anglais *ports*) de sortie de ce séparateur.

Ceci est schématiquement illustré par la figure 9 où l'on voit un séparateur de polarisations 68 dont la voie d'entrée 70 reçoit la lumière à détecter 72 et dont les deux voies de sortie 74 et 76 sont respectivement couplées à deux détecteurs conformes à l'invention 78 et 80 pour y injecter respectivement un faisceau polarisé TE et un faisceau polarisé TM, résultant de la décomposition de la lumière 72 par le séparateur 68.

Des exemples du détecteur optique, objet de l'invention, ont été donnés dans le cas d'un pixel unique dont les dimensions typiques sont 10x10µm et qui est éclairé par un faisceau lumineux focalisé, issu par exemple d'une fibre optique de même diamètre (10µm).

Cependant, le principe de l'invention peut être étendu à la conception d'une matrice de pixels que l'on éclaire par un faisceau lumineux plus large, par exemple pour des applications d'imagerie ultrasensible, auquel cas le critère de largeur angulaire peut être assoupli.

La détection de l'énergie lumineuse dans le supraconducteur peut se faire:
- soit conformément au principe des bolomètres à électrons chauds à seuil, qui utilisent une polarisation en courant sous-critique, en incluant ici en outre le mécanisme des PSC ou centres de glissement de phase (en anglais, *phase-slip centers*)*,*
- soit par mesure de la variation rapide du courant Josephson (détection d'un «vortex Josephson») d'une jonction supraconductrice (STJ) ou d'un SQUID,
- soit par détection de la variation d'impédance d'une jonction tunnel supraconductrice, que l'on polarise dans son « gap » de quasi-particules, suivant le principe des récepteurs SIS (en supprimant le courant Josephson au moyen d'un champ magnétique).

On donne dans ce qui suit des exemples de procédés de fabrication de détecteurs conformes à l'invention.

Un tel détecteur est réalisable par des moyens technologiques bien maîtrisés (dépôt de couches minces, report de substrats). Les épaisseurs des couches ne sont pas critiques (tolérance de l'ordre de ±5%), hormis l'épaisseur de la couche supraconductrice, que l'on sait bien maîtriser par épitaxie.

Les procédés que l'on va décrire peuvent s'appliquer à la fabrication d'un détecteur comportant un pixel unique ou à la fabrication d'une matrice de tels détecteurs.

On donne ci-après un exemple de fabrication de la structure qui est schématiquement représentée sur la figure 4.
1. On commence par former une structure en serpentin dans une couche supraconductrice de NbN, dont l'épaisseur vaut environ 4nm et dont l'indice de réfraction n vaut environ 2,5 + 4,5j où j²=-1, par épitaxie sur un substrat de saphir dont l'indice de réfraction nₛ vaut 1,75 à 1550nm, comme dans l'art antérieur, avec par exemple un pas de 400nm et une largeur de piste de 200nm ; et l'on grave aussi des motifs de positionnement en NbN (non représentés) sur le substrat. Puis on forme des contacts électriques en or ou en platine, dont l'épaisseur vaut environ 15nm, aux deux extrémités de la structure en serpentin, par une technique de pelage (en anglais, lift *off).*
2. Ensuite, on dépose une couche de SiO₂ par-dessus le serpentin et ses contacts, par pulvérisation (en anglais, *sputtering)* ou par PECVD à 350°C, cette couche ayant une épaisseur d'environ 60nm et un indice de réfraction n_{F} égal à 1, 45. Puis on effectue un polissage mécano-chimique sur une profondeur de 40nm environ jusqu'à atteindre les contacts.
3. On prépare ensuite un substrat SOI (silicium sur isolant), comprenant d'une part une fine couche de Si ayant une épaisseur de 460nm et un indice de réfraction n_{H} égal à 3,48, cette fine couche comportant des motifs de positionnement, et d'autre part une couche de SiO₂ comprise entre le substrat SOI et la fine couche de Si. On dépose éventuellement une couche très mince de SiO₂ sur ce substrat SOI pour avoir une meilleure adhérence lors du collage ultérieur du substrat SOI sur le substrat de saphir, cette couche très mince ayant une épaisseur de l'ordre de 5nm à 10nm. On procède ensuite à une gravure (en anglais, *etching)* sèche ou chimique de fenêtres profondes dans le substrat de Si (faisant partie du substrat SOI) jusqu'à la couche de SiO₂, pour dégager les contacts et les motifs de positionnement.
4. On procède ensuite à un collage « pleine plaque » du substrat de SOI sur le substrat de saphir (Al₂O₃), par adhérence moléculaire, à température ambiante, après avoir procédé à un alignement dans le domaine visible à travers la silice, suivant les motifs de positionnement, une précision d'alignement latéral de +-0,5µm étant largement suffisante. Eventuellement, on effectue un recuit à quelques centaines de degrés celsius au-dessus de la température ambiante.
5. On procède ensuite à un amincissement du substrat de Si par polissage mécano-chimique ou par rabotage jusqu'à la couche de SiO₂ puis on grave cette couche.
6. Ensuite, on effectue une lithographie électronique et une gravure (dans l'exemple n_{B} vaut 1) de la couche de Si, éventuellement en alignement avec les lignes de NbN pour atteindre l'absorption maximale (précision requise : +-50nm). On précise que le superstrat est ici constitué par de l'air.
7. Ensuite, on met en place la fibre optique destinée à la propagation du faisceau lumineux incident que l'on veut détecter. Pour cette mise en place, on procède à un alignement actif de la fibre optique sur le détecteur. On établit ensuite les connexions optiques et électriques et l'on refroidit le détecteur à sa température d'utilisation (par exemple 4K).

La taille des substrats de saphir peut être choisie pour être compatible avec celle des substrats de silicium qui sont utilisés dans l'industrie micro-électronique (100 ou 200mm). Cela rend possible la production à bas coût de nombreuses puces sur un même substrat.

En ce qui concerne les variantes de la structure de la figure 4, dont il a été question plus haut, en particulier les structures qui sont schématiquement représentées sur les figures 6, 7 et 8, le procédé de fabrication que l'on vient de décrire comporte en outre une étape de dépôt d'une couche de Si amorphe ou polycristallin (n_{H} et n_{F} étant égaux et prenant une valeur de 3 à 3,5) sur le serpentin, avant la formation du réseau, ce dernier étant ensuite formé sur la couche de Si amorphe ou polycristallin ainsi déposée.

On décrit ci-après un autre mode de fabrication, relatif au cas où les lignes de silicium 36 suivent le serpentin supraconducteur.

Dans cet exemple de réalisation de la structure auto-alignée, on met en oeuvre les étapes suivantes :
1. Dépôt d'une couche supraconductrice de NbN (épaisseur de l'ordre de 4 nm) épitaxiée sur un substrat de saphir, comme dans l'art antérieur.
2. Formation par pelage (en anglais, lift-off) des électrodes par exemple en or ou en aluminium, d'épaisseur 100 nm environ.
3. dépôt d'une couche de silicium amorphe (épaisseur 180nm) par pulvérisation magnétron.
4. Formation du serpentin (largeur de ligne 250 nm, pas 730 nm) par lithographie électronique et gravure simultanée du silicium et du NbN, par l'intermédiaire éventuel d'un masque dur en silice.
5. Dépôt d'une couche de ZnS (épaisseur 400 nm) par pulvérisation et polissage mécano-chimique jusqu'à environ 90 nm au-dessus du silicium.
6. Reprise des contacts par gravure du ZnS.

La structure proposée dans la présente invention est réalisable par des moyens technologiques bien maîtrisés (dépôt de couches minces, report de substrats). Les épaisseurs des couches ne sont pas critiques (tolérance de l'ordre de +5%), hormis celle du supraconducteur, que l'on sait bien maîtriser par épitaxie.

En outre, les procédés indiqués peuvent s'appliquer à la réalisation d'un détecteur comportant un pixel unique ou d'une matrice de détecteurs.

Sur les figures, on n'a pas représenté les moyens de polarisation de l'élément de détection (serpentin supraconducteur) ni les moyens de traitement des signaux fournis par cet élément.

Par ailleurs, au lieu du NbN, on peut utiliser d'autres matériaux supraconducteurs pour former l'élément de détection, par exemple d'autres phases nitrures (par exemple MoN ou TiN) ou des phases de cuprates (par exemple YBa₂Cu₃O₇₋ₓ ou ReBa₂Cu₃O₇₋ₓ).

Plus généralement, au lieu d'être fait d'un matériau supraconducteur, cet élément de détection peut être fait de tout matériau apte à détecter une faible énergie lumineuse et à restituer un signal électrique correspondant à cette énergie. Ce peut être par exemple un matériau semiconducteur ou bolométrique.

Dans les exemples précédents, le superstrat est de l'air mais ce peut être un autre gaz (tous les gaz ont un indice de réfraction proche de 1) ou un liquide, par exemple l'hélium liquide (dont l'indice de réfraction vaut 1,025) ou un solide, par exemple la silice (dont l'indice de réfraction vaut 1,45 dans les domaines visible et proche-infrarouge), ou même le vide (en anglais, *vacuum*)*,* auquel cas l'indice de réfraction vaut 1 et l'on travaille alors sous vide.

Les documents cités dans la présente description sont les suivants :
[Brundrett 00] D. L. Brundrett et al., "Effects of modulation strength in guided-mode resonant subwavelength gratings at normal incidence", J. Opt. Soc. Am. A 17, 1221 (2000)
[FR 2812455] FR 2 812 455 A, R. Sobolewski et al. (Schlumberger and Rochester University, 2/2002)
[Gol'tsman 03] Gol'tsman et al., Fabrication of Nanostructured Superconducting Single Photon Detectors, IEEE Transactions on Applied Superconductivity, 13(2), 192, June 2003
[Jackson 03] D. Jackson, J. Stern, "High bandwidth, improved quantum efficiency detector development for multi -GHz class OKD throughput", Jet Propulsion Laboratory, California Institute of Technology, Single Photon Detector Workshop, NIST Gaithersburg, 4/2003
[Kerman 06] A.J. Kerman et al., "Kinetic-inductance-limited reset time of superconducting nanowire photon counters", Appl. Phys. Letters 88, 111116 (2006)
[Korneev 05] A. Korneev et al., "Quantum efficiency and noise equivalent power of nanostructured, NbN, single photon detectors in the wavelength from visible to infrared", IEEE Trans. Appl. Superconduct. 15, 571 (2005)
[LeCoupanec 03] P. LeCoupanec, W.K. Lo, K. R. Wilsher, "An ultra-low dark count and jitter, superconducting, single-photon detector for emission timing analysis of integrated circuits", Microelectronics Reliability, 43 (2003), 1621
[Nevière 73] P. Nevière et al., "Systematic study of the resonances of holographic thin film couplers", Opt. Commun. 9, 48 (1973)
[Romestain 04] R. Romestain et al., "Fabrication of superconducting niobium nitride hot electron bolometer for single photon counting", New Journal of Physics, 6, 129, (2004)
[Rosenblatt 97] D. Rosenblatt et al., "Resonant grating waveguide structures", IEEE J. Quant. Elec. 33, 2038 (1997)
[Rosfjord 06] K. M. Rosfjord, "Nanowire single photon detector with an integrated optical cavity and antireflection coating", Opt. Expr. 14, 527 (2006)
[Villégier 04] J-C Villégier, "Fabrication of High-Speed Single Photon Detectors and Analog-to-Digital Modulators in NbN Technology for Quantum Information Processing", invited conference, workshop WEH 28 Nov.-3 Dec. 2004, Bad Honnef, D
[Vincent 79] P. Vincent et al., "Corrugated dielectric waveguides : a numerical study of the second-order stop-bands", Appl. Phys. 20, 345 (1979)
[Wang 04] F. Wang, "Photo-détecteurs supraconducteurs pour l'information quantique photonique", rapport de stage d'option scientifique, Ecole Polytechnique, juillet 2004
[Yang 05] J. K. W. Yang et al., "Fabrication development for nanowire GHz-counting-rate single photon detectors", IEEE Trans. Appl. Superconduct. 15, 626 (2005).

## Revendications

1. Détecteur optique, destiné à détecter au moins un photon, ce détecteur comprenant :
- un substrat diélectrique (30), ayant un indice de réfraction n_{O}, et
- un élément de détection (32) formant un serpentin, l'élément de détection étant placé sur le substrat diélectrique et prévu pour engendrer un signal électrique à partir de l'énergie du ou des photons reçus,
ce détecteur optique étant **caractérisé en ce qu'**il comprend en outre
- un réseau diélectrique unidimensionnel (34, 62), comportant des lignes parallèles, à savoir des premières lignes (36, 64, 66) qui sont faites d'un premier matériau diélectrique ayant un indice de réfraction n_{H}, et des deuxièmes lignes (38) qui alternent avec les premières lignes et qui sont faites d'un milieu diélectrique ayant un indice de réfraction n_{B}, le réseau diélectrique unidimensionnel étant placé au-dessus de l'élément de détection, l'ensemble constitué par le réseau diélectrique unidimensionnel et l'élément de détection présentant une résonance d'absorption du ou des photons, sous une incidence donnée et pour une polarisation donnée de ce ou ces photons, n_{H} étant supérieur à n_{O} et à n_{B}, et
- un superstrat (40) ayant un indice de réfraction nᵢ, ce superstrat étant placé au-dessus du réseau diélectrique unidimensionnel, n_{H} étant en outre supérieur à nᵢ.

2. Détecteur optique selon la revendication 1, dans lequel l'incidence donnée est une incidence normale.

3. Détecteur optique selon l'une quelconque des revendications 1 et 2, dans lequel le superstrat est un gaz, notamment l'air, un liquide, un solide ou le vide.

4. Détecteur optique selon l'une quelconque des revendications 1 à 3, dans lequel le pas A du réseau diélectrique unidimensionnel (34) est inférieur à λ_{O}/n_{O}, où λ_{O} représente la longueur d'onde dans le vide du ou des photons, et le couple (wᵣ/Λ, d) est choisi pour conduire à la résonance d'absorption, où wᵣ représente la largeur des premières lignes (36) du réseau diélectrique unidimensionnel et d représente l'épaisseur de ce réseau diélectrique unidimensionnel (34), et Λ est en outre inférieur à λ_{O}/nᵢ.

5. Détecteur optique selon l'une quelconques des revendication 1 à 4, dans lequel la différence n_{H}-n_{B} est supérieure à 1.

6. Détecteur optique selon l'une quelconque des revendications 1 à 5, dans lequel l'élément de détection (32) est fait d'un matériau supraconducteur.

7. Détecteur optique selon l'une quelconque des revendications 1 à 6, dans lequel le serpentin comporte des lignes (44) parallèles, reliées les unes aux autres, et chaque ligne (44) du serpentin est disposée en regard de l'une des lignes (36, 38) du réseau diélectrique unidimensionnel.

8. Détecteur optique selon l'une quelconque des revendications 1 à 6, dans lequel le serpentin comporte des lignes (44) parallèles, reliées les unes aux autres, et chaque ligne (44) du serpentin est disposée en regard de l'une des premières lignes (36) du réseau diélectrique unidimensionnel.

9. Détecteur optique selon l'une quelconque des revendications 1 à 8, dans lequel le serpentin comporte des lignes (44) parallèles, reliées les unes aux autres, et les lignes (44) du serpentin et les premières lignes (36) du réseau diélectrique unidimensionnel ont la même largeur et forment des ensembles périodiques ayant la même période.

10. Détecteur optique selon l'une quelconque des revendications 1 à 3 et 5 à 8, dans lequel les premières lignes (64, 66) du réseau diélectrique unidimensionnel (62) ont des largeurs différentes w_{rL} et w_{rS} et les premières lignes (64) dont la largeur vaut w_{rL} alternent avec les premières lignes (66) dont la largeur vaut w_{rS}.

11. Détecteur optique selon l'une quelconque des revendications 1 à 10, dans lequel les deuxièmes lignes (38) du réseau diélectrique unidimensionnel ont des largeurs différentes.

12. Détecteur optique selon l'une quelconque des revendications 1 à 11, comprenant en outre une couche intermédiaire (60) qui est faite d'un matériau diélectrique ayant un indice de réfraction n supérieur à n_{B} et qui est placée entre l'élément de détection (32) et le réseau diélectrique unidimensionnel (34).

13. Détecteur optique, destiné à détecter un ou des photons, ce détecteur optique comprenant un séparateur de polarisation (68) comportant une voie d'entrée (70), destinée à recevoir le ou les photons, et deux voies de sortie (74,76) qui sont respectivement reliées à deux détecteurs optiques (78, 80) selon l'une quelconque des revendications 1 à 12.

14. Détecteur optique comprenant une matrice de détecteurs optiques selon l'une quelconque des revendications 1 à 13.

## Claims

1. Optical detector, intended to detect at least one photon, this detector comprising:
- a dielectric substrate (30), having a refractive index no, and
- a detecting element (32) forming a serpentine, the detecting element being placed on the dielectric substrate and designed to generate an electric signal using the energy of the photon(s) received,
this optical detector being **characterised in that** it further comprises
- a one-dimensional dielectric grating (34, 62), including parallel lines, namely first lines (36, 64, 66) that are made of a first dielectric material having a refractive index n_{H}, and second lines (38) that alternate with the first lines and that are made of a dielectric medium having a refractive index n_{B}, the one-dimensional dielectric grating being placed above the detecting element, the set constituted by the one-dimensional dielectric grating and the detecting element presenting resonant absorption of the photon(s), at a given incidence and for a given polarisation of the photon(s), n_{H} being greater than no and n_{B}, and
- a superstratum (40) having a refractive index nᵢ, this superstratum being placed above the one-dimensional dielectric grating, n_{H} being furthermore greater than nᵢ.

2. Optical detector set forth in claim 1, wherein the given incidence is a normal incidence.

3. Optical detector as claimed in anyone of claims 1 and 2, wherein the superstratum is a gas, especially air, a liquid, a solid or a vacuum.

4. Optical detector as claimed in anyone of claims 1 to 3, wherein pitch Λ of the one-dimensional dielectric grating (34) is less than λ_{O}/n_{O}, where λ_{O} represents the wavelength in vacuum of the photon(s), and pair (wᵣ/Λ, d) is selected to lead to a resonant absorption, where wᵣ represents the width of the first lines (36) of the one-dimensional dielectric grating and d represents the thickness of this one-dimensional dielectric grating, and Λ is furthermore less than λ_{O}/nᵢ.

5. Optical detector as claimed in anyone of claims 1 to 4, wherein the difference n_{H}-n_{B} is greater than 1.

6. Optical detector as claimed in anyone of claims 1 to 5, wherein the detecting element (32) is made of a superconducting material.

7. Optical detector as claimed in anyone of claims 1 to 6, wherein the serpentine includes parallel lines (44), connected to each other, and each line (44) of the serpentine is positioned facing one of the lines (36, 38) of the one-dimensional dielectric grating.

8. Optical detector as claimed in anyone of claims 1 to 6, wherein the serpentine includes parallel lines (44), connected to each other, and each line of the serpentine is positioned facing one of the first lines (36) of the one-dimensional dielectric grating.

9. Optical detector as claimed in anyone of claims 1 to 8, wherein the serpentine includes parallel lines (44), connected to each other, and lines (44) of the serpentine and the first lines (36) of the one-dimensional dielectric grating have the same width and form periodic units having the same period.

10. Optical detector as claimed in anyone of claims 1 to 3 and 5 to 8, wherein the first lines (64, 66) of the one-dimensional dielectric grating (62) have different widths w_{rL} and w_{rS} and the first lines (64) whose width equals w_{rL} alternate with the first lines (66) whose width equals w_{rS}.

11. Optical detector as claimed in anyone of claims 1 to 10, wherein the second lines (38) of the one-dimensional dielectric grating have different widths.

12. Optical detector as claimed in anyone of claims 1 to 11, further comprising an intermediary layer (60) which is made of a dielectric material having a refractive index n greater than n_{B} and which is placed between the detecting element (32) and the one-dimensional dielectric grating (34).

13. Optical detector, intended to detect one photon or photons, this optical detector including a polarisation splitter (68) including an input port (70), intended to receive the photon(s), and two output ports (74, 76) which are respectively connected to two optical detectors (78, 80) as claimed in anyone of claims 1 to 12.

14. Optical detector including a matrix of optical detectors as claimed in anyone of claims 1 to 13.

## Patentansprüche

1. Optischer Detektor, bestimmt zur Detektion wenigstens eines Photons, wobei dieser Detektor umfasst:
- ein dielektrisches Substrat (30) mit einer Brechzahl n_{O}, und
- ein auf dem dielektrischen Substrat ausgebildetes, die Form einer Schlange aufweisendes Detektionselement (32), dazu bestimmt, aus der Energie des empfangenen Photons oder der empfangenen Photonen ein elektrisches Signal zu erzeugen,
wobei dieser optische Detektor **dadurch gekennzeichnet ist,**
**dass** er außerdem umfasst:
- ein eindimensionales dielektrisches Gitter (34, 62) mit parallelen Linien, nämlich ersten Linien (36, 64, 66), die aus einem ersten dielektrischen Material mit einer Brechzahl n_{H} sind, und zweiten Linien (38), die sich mit den ersten Linien abwechseln und aus einem zweiten dielektrischen Material mit einer Brechzahl n_{B} sind, wobei sich das eindimensionale dielektrische Gitter über dem Detektionselement befindet und das durch das eindimensionale dielektrische Gitter und das Detektionselement gebildete Ganze dabei unter einem gegebenen Einfallswinkel und bei einer gegebenen Polarisation des Photons oder der Photonen eine Absorptionsresonanz dieses Photons oder dieser Photonen aufweist, wobei n_{H} größer ist als n_{O} und als n_{B}, und
- ein Substrat (40) mit einer Brechzahl nᵢ, wobei dieses Substrat sich über dem eindimensionalen dielektrischen Gitter befindet und n_{H} zudem größer als nᵢ ist.

2. Optischer Detektor nach Anspruch 1, bei dem der gegebene Einfallwinkel ein normaler Einfallswinkel ist.

3. Optischer Detektor nach einem der Ansprüche 1 und 2, bei dem das Substrat ein Gas, insbesondere Luft, eine Flüssigkeit, ein Feststoff oder Vakuum ist.

4. Optischer Detektor nach einem der Ansprüche 1 bis 3, bei dem die Teilung Λ des eindimensionalen dielektrischen Gitters (34) kleiner ist als λ_{O}/n_{O}, wo λ_{O} die Wellenlänge des Photons oder der Photonen im Vakuum darstellt, und das Paar (wᵣ/Λ, d) ausgewählt wird, um zur Absorptionsresonanz zu führen, wo wᵣ die Breite der ersten Linien (36) des eindimensionalen dielektrischen Gitters darstellt, d die Dicke dieses eindimensionalen dielektrischen Gitters (34) darstellt und Λ zudem kleiner als λ_{O}/nᵢ ist.

5. Optischer Detektor nach einem der Ansprüche 1 bis 4, bei dem die Differenz n_{H}-n_{B} größer als 1 ist.

6. Optischer Detektor nach einem der Ansprüche 1 bis 5, bei dem das Detektionselement (32) aus einem supraleitenden Material ist.

7. Optischer Detektor nach einem der Ansprüche 1 bis 6, bei dem die Schlange miteinander verbundene parallele Linien (44) umfasst und jede Linie (44) der Schlange einer der Linien (36, 38) des eindimensionalen dielektrischen Gitters gegenübersteht.

8. Optischer Detektor nach einem der Ansprüche 1 bis 6, bei dem die Schlange miteinander verbundene parallele Linien (44) umfasst und jede Linie (44) der Schlange einer der ersten Linien (36) des eindimensionalen dielektrischen Gitters gegenübersteht.

9. Optischer Detektor nach einem der Ansprüche 1 bis 8, bei dem die Schlange miteinander verbundene parallele Linien (44) umfasst und die Linien (44) der Schlange und die ersten Linien (36) des eindimensionalen dielektrischen Gitters die gleiche Breite haben und periodische Gruppen bilden, welche die gleiche Periode haben.

10. Optischer Detektor nach einem der Ansprüche 1 bis 3 und 5 bis 8, bei dem die ersten Linien (64, 66) des eindimensionalen dielektrischen Gitters (62) unterschiedliche Breiten w_{rL} und w_{rS} haben, und die ersten Linien (64), deren Breite w_{rL} beträgt, sich mit den ersten Linien (66) abwechseln, deren Breite w_{rS} beträgt.

11. Optischer Detektor nach einem der Ansprüche 1 bis 10, bei dem die zweiten Linien (38) des eindimensionalen dielektrischen Gitters unterschiedliche Breiten haben.

12. Optischer Detektor nach einem der Ansprüche 1 bis 11, der zudem eine Zwischenschicht (60) umfasst, die aus einem dielektrischen Material mit einer Brechzahl n größer als n_{B} ist und die sich zwischen dem Detektionselement (32) und dem eindimensionalen dielektrischen Gitter (34) befindet.

13. Optischer Detektor, bestimmt zur Detektion von einem Photon oder von Photonen, wobei dieser optische Detektor umfasst: einen Polarisationsseparator (68) mit einem Eingangskanal (70), dazu bestimmt, das Photon oder die Photonen zu empfangen, und zwei Ausgangskanäle (74, 76), jeweils verbunden mit zwei optischen Detektoren (78, 80) nach einem der vorangehenden Ansprüche 1 bis 12.

14. Optischer Detektor mit einer Matrix aus optischen Detektoren nach einem der Ansprüche 1 bis 13.
